# FASCICULE DE BREVET EUROPEEN

(11) **EP 0 623 859 B1**
(45) Date de publication et mention de la délivrance du brevet: **12.01.2000**
(21) Numéro de dépôt: 94104883.7
(22) Date de dépôt: 28.03.1994
(51) Int. Cl.: G05B 19/10, H05B 6/68

(54) **Four de cuisson et son tableau de commande**
Kochofen und seine Schalttafel
Cooking oven and its control panel

(30) Priorité: 01.04.1993 FR 9303854
(43) Date de publication de la demande: 09.11.1994
(73) Titulaire: Moulinex S.A., 13123 Cormelles-le-Royal (FR)
(72) Inventeur: De Matteis, Michel Guy, F-14160 Cambes-en-Plaine (FR); Guilgue, Jean-Louis Marcel René, F-14400 Beny-sur-Mer (FR)
(74) Mandataire: May, Hans Ulrich, Dr.

(56) Documents cités:
- EP-A- 0 106 898
- EP-A- 0 176 965
- EP-A- 0 376 741
- EP-A- 0 447 979
- GB-A- 2 160 694
- US-A- 4 405 991
- US-A- 4 447 692

## Description

L'invention concerne un four comprenant une enceinte de cuisson des aliments comportant un dispositif de dorage à résistance électrique, un dispositif à chaleur tournante et un dispositif de génération d'énergie micro-ondes, un circuit d'alimentation pour alimenter le dispositif de dorage à résistance électrique et/ou le dispositif à chaleur tournante et/ou le dispositif de génération d'énergie micro-ondes, et un tableau de commande qui comporte, d'une part, des moyens de sélection permettant de choisir une séquence de chauffage à appliquer dans ladite enceinte et faisant intervenir le dispositif de dorage et/ou le dispositif à chaleur tournante et/ou le dispositif de génération d'énergie micro-ondes, et de saisir le type d'aliment et son poids, et, d'autre part, des moyens de commande reliés à des moyens de traitement d'informations qui comprennent un calculateur principal déterminant un temps de chauffage en fonction des moyens de sélection et qui déclenchent le fonctionnement du circuit d'alimentation.

Dans les fours de cuisson connus de ce genre, lorsqu'un utilisateur souhaite traiter un aliment particulier par une opération de chauffage déterminée, l'utilisateur doit effectuer une programmation manuelle nécessitant une manipulation complexe comme cela est décrit dans le brevet US 4 447 692 et la demande de brevet EP 106 898. D'autre part, lors de la programmation manuelle, l'utilisateur doit agir avec précaution et minutie pour saisir toutes les informations nécessaires à l'établissement de l'opération de chauffage déterminée. En effet, le tableau de bord d'un four de cuisson est généralement difficile à lire et nécessite souvent l'emploi d'une notice d'utilisation pour établir les correspondances entre les pictogrammes placés sur le tableau de bord de sélection et la signification desdits pictogrammes. Enfin, l'utilisateur doit généralement faire appel à des livres de recettes de cuisine pour connaître certaines informations à entrer par les moyens de sélection.

Le but de l'invention est de remédier aux inconvénients précités en mettant en oeuvre un four de cuisson contenant toutes les informations nécessaires à l'établissement d'une opération de chauffage déterminée afin d'améliorer la convivialité du tableau de commande dudit four de cuisson.

Selon l'invention, les moyens de traitement d'informations, d'une part, sont connectés à un moyen de visualisation affichant le temps de chauffage calculé ainsi qu'une représentation du dispositif de dorage et/ou du dispositif à chaleur tournante et/ou du dispositif de génération d'énergie micro-ondes mis en activation lors du déclenchement du circuit d'alimentation, et, d'autre part, comprennent un calculateur esclave en liaison avec le calculateur principal par un bus bidirectionnel et sur lequel sont connectés les moyens de sélection, une mémoire de stockage contenant des informations sélectionnables par les moyens de sélection et ledit moyen de visualisation pour afficher les informations sélectionnables.

Grâce au four de cuisson selon l'invention, un utilisateur, par la simple manipulation des moyens de sélection, voit défiler sur les moyens de visualisation toutes les informations nécessaires pour le fonctionnement d'un four dans lequel est inséré un aliment à traiter. Lors de la programmation dudit four, l'utilisateur choisit, par les moyens de sélection, une séquence de chauffage, un type d'aliment et un poids d'aliment et déclenche ensuite les moyens de commande pour vérifier et modifier s'il y a lieu les informations sélectionnées. Cette programmation est simple pour l'utilisateur qui dispose ainsi, dans un même four, de toutes les informations pour obtenir un fonctionnement optimum du four, ladite programmation étant facilitée par une clarté et une simplicité du tableau de commande. D'autre part, l'utilisateur n'a plus de soucis concernant les sélections des temps de chauffage. Les calculateurs intégrés à l'intérieur du four de cuisson prennent en considération les informations sélectionnées par les moyens de sélection et déterminent, sans intervention de l'utilisateur, l 'opération de chauffage optimum à appliquer sur l'aliment. De cette manière, l'utilisateur possède un tableau de commande convivial avec lequel il peut dialoguer sans faire appel à des supports externes d'informations.

Les caractéristiques et avantages de l'invention ressortiront d'ailleurs de la description qui va suivre, prise à titre d'exemple non limitatif, en référence aux dessins annexés dans lesquels :
- la figure 1 est une vue en coupe d'un four de cuisson du type classique illustrant différents dispositifs de chauffage ;
- la figure 2 est une représentation schématique illustrant des moyens de traitement d'informations selon l'invention , destinés à équiper un four de cuisson tel qu'illustré à la figure 1 ;
- la figure 3 est un schéma fonctionnel illustrant sous forme de blocs le procédé de fonctionnement du four de cuisson selon l'invention .

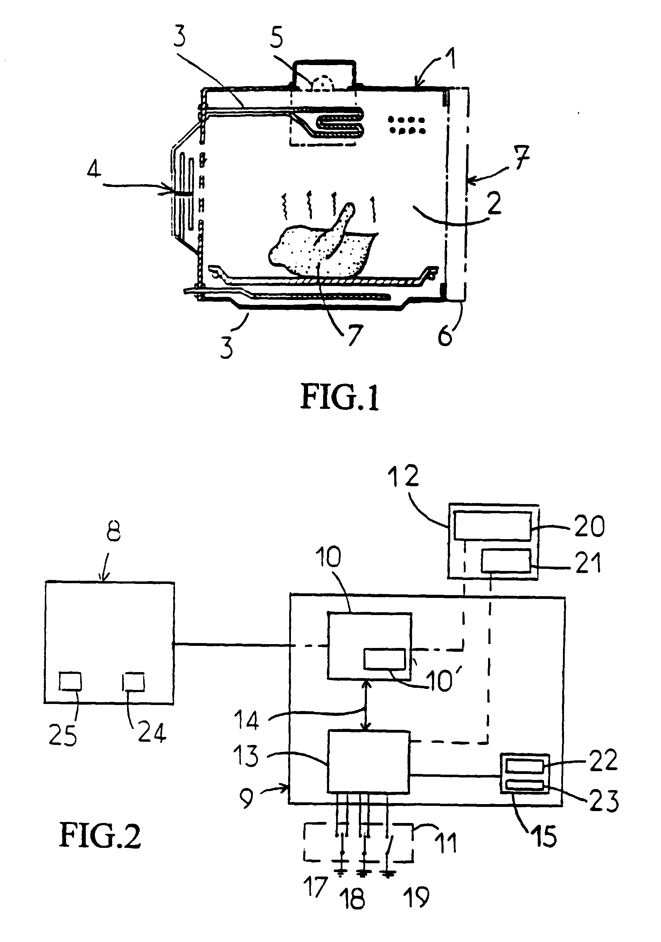

Selon la figure 1, un appareil de cuisson 1 tel qu'un four de cuisson comprend une enceinte de cuisson 2 comportant un dispositif de dorage à résistance électrique 3, un dispositif à chaleur tournante 4 et un dispositif de génération d'énergie micro-ondes 5 et un circuit d'alimentation non représenté pour alimenter le dispositif de dorage 3 et/ou le dispositif à chaleur tournante et/ou le dispositif de génération d'énergie micro-ondes 5. L'enceinte de cuisson 2 est délimitée par une porte 6 représentée en traits interrompus et placée sur la face avant 7 du four de cuisson. Cette face avant 7 comporte un tableau de commande non représenté comprenant des moyens de sélection permettant, d'une part, de choisir une séquence de chauffage à appliquer dans l'enceinte 2, ladite séquence de chauffage faisant intervenir le dispositif de dorage et/ou le dispositif à chaleur tournante et/ou le dispositif de génération d'énergie micro-ondes et, d'autre part, de saisir l'aliment et son poids, et des moyens de commande 8.

Selon la figure 2, les moyens de commande 8 sont reliés à des moyens de traitement d'informations 9 qui comprennent un calculateur principal 10 déterminant un temps de chauffage en fonction de moyens de sélection 11 et d'une mémoire d'informations 10' et qui déclenchent le fonctionnement du circuit d'alimentation. Le calculateur principal 10 des moyens de traitement d'informations 9 est connecté à un moyen de visualisation 12 affichant le temps de chauffage calculé ainsi qu'une représentation du dispositif de dorage 3 et/ou le dispositif à chaleur tournante 4 et/ou le dispositif de génération d'énergie micro-ondes 5 mis en activation lors du déclenchement du circuit d'alimentation. Les moyens de traitement d'informations 9 comprennent également un calculateur esclave 13 en liaison avec le calculateur principal 10 par un bus bidirectionnel 14 et sur lequel sont connectés les moyens de sélection 11, une mémoire de stockage 15 contenant des informations sélectionnables par les moyens de sélection 11 et le moyen de visualisation 12 pour afficher les informations sélectionnables.

Le moyen de visualisation 12 comprend, par exemple, un premier moyen de visualisation 20 connecté au calculateur principal 10 et un deuxième moyen de visualisation 21 connecté au calculateur esclave 13.

Les moyens de sélection 11 comprennent un moyen de sélection d'un type d'aliment 17, un moyen de sélection du poids du type d'aliment sélectionné 18 et un moyen de sélection d'une séquence de chauffage 19 à appliquer sur chaque type d'aliment.

Lesdits moyens de sélection 11 sont, par exemple, des encodeurs rotatifs de type connu qui, par leur actionnement, permettent le défilement, sur le moyen de visualisation 12 de certaines informations contenues dans la mémoire de stockage 15 et des informations à sélectionner.

La mémoire de stockage comporte une première mémoire 22 comprenant n fiches contenant , chacune , dans une langue d'un pays déterminé , une liste déterminée d'un certain nombre de type d'aliments, un nombre défini i de séquences de chauffage à appliquer sur chaque type d'aliment, des numéros de codes αᵢ correspondant chacun à un type d'aliment en fonction d'une séquence de chauffage déterminée et une deuxième mémoire 23 contenant des valeurs de poids d'aliments. La mémoire d'informations du calculateur principal 10 comporte, entre autres, un mot de sélection d'une langue d'un pays particulier. Ce mot de sélection d'une langue assure, lorsqu'il est envoyé vers le calculateur esclave, la sélection d'une des n fiches dans laquelle l'utilisateur d'un pays particulier est susceptible de choisir un type d'aliment déterminé.

Les moyens de sélection d'une séquence de chauffage 19 permettent, dans notre exemple de réalisation, de sélectionner, soit une séquence de décongélation ; soit une séquence de réchauffage, soit une séquence de cuisson, soit une séquence de cuisson-dorage-gratinage-rôtissage. Le nombre i de séquences de chauffage sélectionnables est donc de quatre séquences mais ce nombre n'est pas limitatif.

Les moyens de commande 8 comprennent, d'une part, un bouton de démarrage 24 pour déclencher les moyens de traitement de l'information qui activent le fonctionnement du circuit d'alimentation et, d'autre part, un bouton test 25 pour contrôler le résultat déterminé par les moyens de traitement selon les informations choisies à l'aide des moyens de sélection.

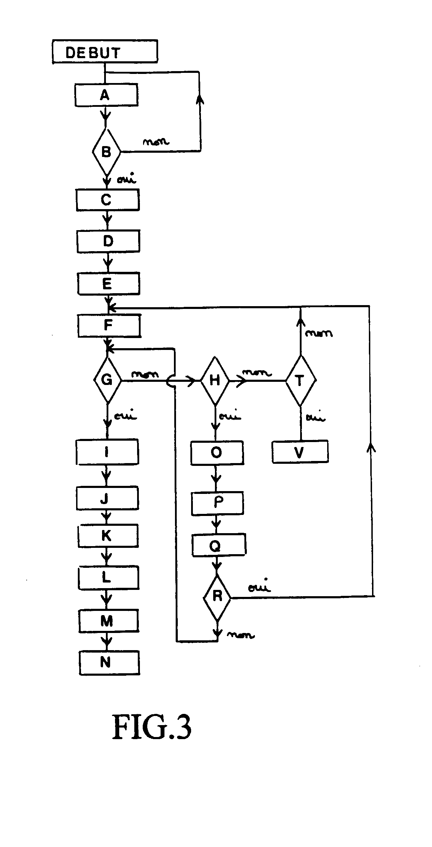

Afin d'illustrer le fonctionnement du four, on a représenté sur la figure 3, un organigramme correspondant au procédé de fonctionnement du four de cuisson selon l'invention.

Dans un premier temps, après que l'utilisateur ait placé un aliment 7 à traiter dans l'enceinte de cuisson 2, l'utilisateur active un quelconque des moyens de sélection 11, référencé en A. Le calculateur esclave 13 provoque une demande d'excitation vers le calculateur principal 10 au travers du bus 14, référencé en B. Si l'état du calculateur principal 10 n'est pas en état de repos, on revient à la position initiale "DEBUT". Si l'état du calculateur principal est en état de repos, ledit calculateur principal 10 déclenche par un sous-programme la fabrication d'un premier message M₁, référencé en C, contenant une commande de mise en marche. Le calculateur principal 10 envoie vers le calculateur esclave 13 ledit premier message M₁ ainsi qu'un mot de sélection d'une langue d'un pays particulier, référencé en D, le calculateur esclave 13 envoie, après réception du premier message M₁ et du mot de sélection d'une langue, un accusé réception AR vers le calculateur principal 10, le calculateur esclave 13 déclenche l'activation du moyen de visualisation 21 des moyens de sélection 11, référencé en E.

Dans un deuxième temps, l'utilisateur active successivement chacun des moyens de sélection 11, référencé en F, pour enregistrer le type d'aliment à traiter, le poids dudit aliment et la séquence de chauffage à appliquer sur ledit aliment. A chaque activation d'un des moyens de sélection, le deuxième moyen de visualisation 21 affiche l'une des informations sélectionnables par ledit moyen de sélection utilisé.

Dans un troisième temps, après la programmation par l'utilisateur de l'ensemble des informations sélectionnables par tous les moyens de sélection 11, l'utilisateur active soit le bouton de démarrage 24, référencé en G, soit le bouton de test 25, référencé en H.

Si l'utilisateur active le bouton de démarrage 24, le calculateur principal 10 transfère dans sa mémoire d'informations 10', référencé en I, les informations issues des moyens de sélection 11 et contenues dans la mémoire de stockage 15 liée au calculateur esclave 13. Le calculateur principal 10 calcule le temps de chauffage à appliquer et recherche l'opération de chauffage correspondante, référencé en J. Le premier moyen de visualisation 20 affiche ledit temps de chauffage ainsi qu'une représentation du dispositif de dorage et/ou du dispositif à chaleur tournante et/ou du dispositif de génération d'énergie micro-ondes susceptible de fonctionner lors du déclenchement du circuit d'alimentation, référencé en K. Le calculateur principal 10 déclenche le fonctionnement du circuit d'alimentation, référencé en L, et inhibe le calculateur esclave 13, référencé en M. Le calculateur principal 10 détermine la fin de l'opération de chauffage, déclenche l'état de repos, et envoie vers le calculateur esclave 13 un message de fin d'opération entraînant l'extinction du deuxième moyen de visualisation 21 et la mise en position d'attente dudit calculateur esclave 13, référencé en N.

Si l'utilisateur active le bouton de test 25, le calculateur principal 10 transfère dans sa mémoire d'informations 10', référencé en O, les informations issues des moyens de sélection 11 et contenues dans la mémoire de stockage 15. Le calculateur principal 10 calcule le temps de chauffage à appliquer et recherche l'opération de chauffage correspondante, référencé en P. Le premier moyen de visualisation 20 affiche ledit temps de chauffage calculé ainsi qu'une représentation du dispositif de dorage et/ou du dispositif à chaleur tournante et/ou du dispositif de génération d'énergie micro-ondes susceptible d'être mis en fonctionnement lors de l'opération de chauffage déterminée par les moyens de traitement, référencé en Q. Si l'utilisateur n'active pas le bouton de test 25, le calculateur principal 10 déclenche l'écoulement d'une temporisation Tp, référencée en T. Si la temporisation Tp s'écoule, le calculateur principal 10 est désactivé et interrompt la séquence de fonctionnement, référencé en V. Si la temporisation Tp ne s'écoule pas, l'utilisateur sélectionne les moyens de sélection, référencés en F.

L'utilisateur vérifie ainsi, avant le déclenchement du bouton de démarrage 24, l'opération de chauffage déterminée par les moyens de traitement 9. L'utilisateur corrige, s'il y a lieu, ladite opération de chauffage, référencé en R. En effet, le calculateur esclave et le calculateur principal 10 étant toujours actifs pendant un temps t, l'utilisateur peut modifier, par les moyens de sélection 11, l'opération de chauffage choisie avant l'activation du bouton de démarrage 24. De cette manière, à tout moment avant l'activation du bouton de démarrage, l'utilisateur contrôle l'opération de chauffage à appliquer sur un aliment placé à l'intérieur de l'enceinte de cuisson 2.

Grâce au four de cuisson selon l'invention, un utilisateur déclenche et contrôle simplement une opération de chauffage sur un aliment placé à l'intérieur de l'enceinte de cuisson. D'autre part, le moyen de visualisation 12 des différentes informations calculées et sélectionnées assure pour l'utilisateur, un suivi de ladite opération de chauffage tout en lui laissant une liberté d'intervention .

## Revendications

1. Four comprenant une enceinte de cuisson (2) des aliments comportant un dispositif de dorage à résistance électrique (3), un dispositif à chaleur tournante (4) et un dispositif de génération d'énergie micro-ondes (5), un circuit d'alimentation pour alimenter le dispositif de dorage à résistance électrique et/ou le dispositif à chaleur tournante et/ou le dispositif de génération d'énergie micro-ondes, et un tableau de commande qui comporte, d'une part, des moyens de sélection (11) permettant de choisir une séquence de chauffage à appliquer dans ladite enceinte (2) et faisant intervenir le dispositif de dorage (3) et/ou le dispositif à chaleur tournante (4) et/ou le dispositif de génération d'énergie micro-ondes (5), et de saisir le type d'aliment et son poids, et, d'autre part, des moyens de commande (8) reliés à des moyens de traitement d'informations (9) qui comprennent un calculateur principal (10) déterminant un temps de chauffage en fonction des moyens de sélection et qui déclenchent le fonctionnement du circuit d'alimentation ,
**caractérisé en ce que** les moyens de traitement d'informations (9), d'une part, sont connectés à un moyen de visualisation (12) affichant le temps de chauffage calculé ainsi qu'une représentation du dispositif de dorage (3) et/ou du dispositif à chaleur tournante (4) et/ou du dispositif de génération d'énergie micro-ondes (5) mis en activation lors du déclenchement du circuit d'alimentation, et, d'autre part, comprennent un calculateur esclave (13) en liaison avec le calculateur principal (10) par un bus bidirectionnel (14) et sur lequel sont connectés les moyens de sélection (11), une mémoire de stockage (15) contenant des informations sélectionnables par les moyens de sélection (11) et le moyen de visualisation (12) pour afficher les informations sélectionnables.

2. Four de cuisson selon la revendication 1, **caractérisé en ce que** le moyen de visualisation (12) comprend un premier moyen de visualisation (20) connecté au calculateur principal (10) et un deuxième moyen de visualisation (21) connecté au calculateur esclave (13).

3. Four de cuisson selon l'une quelconque des revendications précédentes,
**caractérisé en ce que** la mémoire de stockage (15) contient :
- n fiches contenant, chacune, dans une langue d'un pays déterminé, une liste déterminée d'un certain nombre de type d'aliments ;
- un nombre défini i de séquences de chauffage à appliquer à chaque type d'aliment ;
- des numéros de codes αᵢ correspondant chacun à un type d'aliment particulier en fonction d'une séquence de chauffage déterminée.

4. Four de cuisson selon la revendication 3,
**caractérisé en ce que** le nombre i de séquences de chauffage à sélectionner est de l'ordre de 4 et correspond soit à une décongélation, soit à un réchauffage, soit à une cuisson, soit à une cuisson-dorage-gratinage-rôtissage.

5. Four de cuisson selon l'une quelconque des revendications précédentes,
**caractérisé en ce que** les moyens de commande (8) comprennent un bouton de démarrage (24) pour déclencher l'activation des moyens de traitement d'informations et un bouton de test (25) pour contrôler les moyens de traitement.

6. Procédé de fonctionnement d'un four selon la revendication 5,
**caractérisé en ce que,** lors d'un premier actionnement d'un quelconque des moyens de sélection (11) par l'utilisateur, les moyens de commande (8) permettent le déclenchement de l'excitation du calculateur principal (10) qui déclenche par un sous-programme la fabrication d'un premier message M₁ contenant une commande de mise en marche et le calculateur principal (10) envoie, vers le calculateur esclave (13), ledit premier message M₁ ainsi qu'un mot de sélection d'une langue d'un pays particulier, le calculateur esclave (13) envoie, après réception du premier message M₁ et du mot de sélection d'une langue, un accusé réception AR vers le calculateur principal (10), le calculateur esclave (13) déclenche l'activation du moyen de visualisation (12) des moyens de sélection, puis lors d'un deuxième actionnement des moyens de sélection (11) par l'utilisateur, le moyen de visualisation (12) affiche le type d'aliment sélectionné par l'utilisateur, le poids dudit aliment ainsi que la séquence de chauffage déterminée et, lors de l'activation par l'utilisateur soit du bouton de démarrage (24), soit du bouton de test (25), les moyens de commande (8) déclenchent respectivement, soit le démarrage d'une séquence de chauffage déterminée par les moyens de traitement d'informations (9) en fonction des moyens de sélection (11), soit un contrôle de ladite séquence de chauffage déterminée par les moyens de traitement (9) sans démarrage de ladite séquence de chauffage, ledit contrôle permettant une consultation par l'utilisateur des informations sélectionnées et calculées ou une modification éventuelle de l'opération de chauffage déterminée avant le démarrage du four.

7. Procédé de fonctionnement d'un four selon la revendication 6,
**caractérisé en ce que** l'utilisateur actionnant le bouton de démarrage (24), le calculateur principal transfère dans sa mémoire de stockage (15) les informations issues des moyens de sélection (11) et contenues dans la mémoire de stockage (15) liée au calculateur esclave (13), le calculateur principal (10) calcule le temps de chauffage à appliquer et correspondant à la séquence de chauffage déterminée, le moyen de visualisation affiche ledit temps de chauffage ainsi qu'une représentation du dispositif de dorage et/ou du dispositif à chaleur tournante et/ou du dispositif de génération d'énergie micro-ondes fonctionnant pour ladite séquence de chauffage sélectionnée, le calculateur principal déclenche le fonctionnement du circuit d'alimentation et inhibe le calculateur esclave, le calculateur principal détermine la fin de la séquence de chauffage sélectionnée, déclenche son état de repos, et envoie vers le calculateur esclave un message de fin d'opération entraînant l'extinction du deuxième moyen de visualisation et la mise en position d'attente dudit calculateur esclave.

8. Procédé de fonctionnement d'un four selon la revendication 6,
**caractérisé en ce que** l'utilisateur actionnant le bouton de test, le calculateur principal transfère dans sa mémoire d'informations, les informations issues des moyens de sélection et contenues dans la mémoire de stockage liée au calculateur esclave, et le calculateur principal calcule le temps de chauffage à appliquer sur l'aliment à traiter , le premier moyen de visualisation affiche ledit temps de chauffage calculé ainsi qu'une représentation du dispositif de dorage et/ou du dispositif à chaleur tournante et/ou du dispositif de génération d'énergie microondes mis en fonctionnement lors de l'opération de chauffage choisie par les moyens de traitement, le calculateur principal et le calculateur esclave étant actifs pendant un temps t au cours duquel l'utilisateur peut modifier, annuler ou déclencher l'opération de chauffage déterminée par les moyens de traitement d'informations et revenant dans un état de repos si aucune action n'est déclenchée.

## Patentansprüche

1. Ofen mit einem Kochraum (2) für Nahrungsmittel mit einer Bräunungsvorrichtung mit elektrischem Widerstand (3), einer Umluft-Erhitzungsvorrichtung (4) und einer Vorrichtung zur Erzeugung von Mikrowellenenergie (5), einem Speisekreis zum Speisen der Bräunungsvorrichtung mit elektrischem Widerstand und/oder der Umluft-Erhitzungsvorrichtung und/oder der Vorrichtung zur Erzeugung von Mikrowellenenergie, und einer Schalttafel, die einerseits Wahlvorrichtungen (11) aufweist, welche es ermöglichen, eine in dem Kochraum (2) anzuwendende Erhitzungssequenz auszuwählen und die Bräunungsvorrichtung (3) und/oder die Umluft-Erhitzungsvorrichtung (4) und/oder die Vorrichtung zur Erzeugung von Mikrowellenenergie (5) einzuschalten und die Art des Nahrungsmittels und sein Gewicht zu erfassen, und andererseits eine Steuervorrichtung (8) aufweist, die mit einer Einrichtung zur Informationsverarbeitung (9) verbunden ist, die einen Hauptrechner (10) aufweist, der eine Erhitzungszeit in Abhängigkeit von den Wahlvorrichtungen festlegt, und welche den Betrieb des Speisekreises auslöst,
**dadurch gekennzeichnet, daß** die Informationsverarbeitungseinrichtung (9) einerseits mit einer Anzeigeeinrichtung (12) verbunden ist, welche die berechnete Erhitzungszeit sowie eine Darstellung der Bräunungsvorrichtung (3) und/oder der Umluft-Erhitzungsvorrichtung (4) und/oder der Vorrichtung zur Erzeugung von Mikrowellenenergie (5), die beim Auslösen des Speisekreises aktiviert werden, anzeigt, und andererseits einen Sklavenrechner (13) aufweist, der durch einen bidirektionalen Bus (14) mit dem Hauptrechner (10) verbunden ist und mit dem die Wahlvorrichtungen (11), ein Vorratsspeicher (15), der die durch die Wahlvorrichtungen (11) auswählbaren Informationen enthält, und die Anzeigeeinrichtung (12) zum Anzeigen der auswählbaren Informationen verbunden sind.

2. Kochofen nach Anspruch 1, **dadurch gekennzeichnet, daß** die Anzeigeeinrichtung (12) eine erste Anzeigevorrichtung (20), die mit dem Hauptrechner (10) verbunden ist, und eine zweite Anzeigevorrichtung (21), die mit dem Sklavenrechner (13) verbunden ist, aufweist.

3. Kochofen nach einem der vorangehenden Ansprüche, **dadurch gekennzeichnet, daß** der Vorratsspeicher (15) enthält:
- n Tabellen, die jede in einer Sprache eines bestimmten Landes eine bestimmte Liste einer bestimmten Anzahl von Typen von Nahrungsmitteln enthalten;
- eine bestimmte Zahl i von für jeden Typ von Nahrungsmittel anzuwendenden Erhitzungssequenzen;
- Code-Ziffern αᵢ, die jede einem bestimmten Typ von Nahrungsmittel in Abhängigkeit von einer bestimmten Erhitzungssequenz entsprechen.

4. Kochofen nach Anspruch 3, **dadurch gekennzeichnet, daß** die Zahl i von auszuwählenden Erhitzungssequenzen in der Größenordnung von 4 ist und entweder einem Auftauen oder einem Aufwärmen oder einem Kochen oder einem Kochen-Bräunen-Gratinieren-Braten entspricht.

5. Kochofen nach einem der vorangehenden Ansprüche, **dadurch gekennzeichnet, daß** die Steuervorrichtung (8) einen Startknopf (24), um die Aktivierung der Informationsverarbeitungseinrichtung auszulösen, und einen Testknopf (25), um die Verarbeitungseinrichtung zu kontrollieren, aufweist.

6. Verfahren zur Durchführung des Betriebs eines Ofens nach Anspruch 5, **dadurch gekennzeichnet, daß** bei einer ersten Betätigung einer beliebigen der Wahlvorrichtungen (11) durch den Benutzer die Steuervorrichtung (8) es ermöglicht, die Aktivierung des Hauptrechners (10) auszulösen, der durch ein Unterprogramm die Herstellung einer ersten Nachricht M₁, die einen Startbefehl enthält, auslöst, und der Hauptrechner (10) dem Sklavenrechner (13) diese erste Nachricht M₁ sowie ein Wort zur Auswahl einer Sprache eines bestimmten Landes zuleitet, der Sklavenrechner (13) nach Empfang der ersten Nachricht M₁ und des Auswahlworts zur Auswahl einer Sprache dem Hauptrechner (10) eine Empfangsanzeige AR zuleitet, der Sklavenrechner (13) die Aktivierung der Anzeigeeinrichtung (12) der Wahlvorrichtungen auslöst und dann, nach einer zweiten Betätigung der Wahlvorrichtungen 11 durch den Benutzer die Anzeigeeinrichtung (12) die Art des vom Benutzer gewählten Nahrungsmittels, das Gewicht des Nahrungsmittels sowie die bestimmte Erhitzungssequenz anzeigt und, wenn der Benutzer entweder den Startknopf (24) oder den Testknopf (25) betätigt, die Steuervorrichtung (8) jeweils entweder den Start einer bestimmten Erhitzungssequenz durch die Informationsverarbeitungseinrichtung (9) in Abhängigkeit von den Wahlvorrichtungen (11) auslöst, oder eine Kontrolle der durch die Verarbeitungseinrichtung (9) bestimmten Erhitzungssequenz ohne Auslösen dieser Erhitzungssequenz auslöst, wobei die Kontrolle dem Benutzer eine Kenntnisnahme von den ausgewählten und berechneten Informationen oder eine mögliche Modifizierung der bestimmen Erhitzungsmaßnahme vor dem Einschalten des Ofens ermöglicht.

7. Verfahren zum Betreiben eines Ofens nach Anspruch 6, **dadurch gekennzeichnet, daß** wenn der Benutzer den Startknopf (24) betätigt, der Hauptrechner die von den Wahlvorrichtungen (11) ausgesandten und in seinem mit dem Sklavenrechner (13) verbundenen Vorratsspeicher enthaltenen Informationen in seinen Vorratsspeicher (15) überträgt, der Hauptrechner (10) die anzuwendende Erhitzungszeit, die der bestimmten Erhitzungssequenz entspricht, berechnet, die Anzeigeeinrichtung die Erhitzungszeit sowie eine Darstellung der Bräunungsvorrichtung und/oder der Umluft-Erhitzungsvorrichtung und/oder der Vorrichtung zur Erzeugung von Mikrowellenenergie, die während der gewählten Erhitzungssequenz arbeiten, anzeigt, der Hauptrechner den Betrieb des Speisekreises auslöst und den Sklavenrechner sperrt, der Hauptrechner das Ende der gewählten Erhitzungssequenz bestimmt, seinen Ruhezustand auslöst und dem Sklavenrechner eine Nachricht vom Ende der Maßnahme zuleitet, welche zum Erlöschen der zweiten Anzeigevorrichtung und dazu führt, den Sklavenrechner in die Bereitschaftsstellung zu bringen.

8. Verfahren zum Betreiben eines Ofens nach Anspruch 6, **dadurch gekennzeichnet, daß** wenn der Benutzer den Testknopf betätigt, der Hauptrechner die von den Wahlvorrichtungen ausgesandten und in dem mit dem Sklavenrechner verbundenen Vorratsspeicher enthaltenen Informationen in seinen Informationsspeicher überträgt und der Hauptrechner die für das zu behandelnde Nahrungsmittel anzuwendende Erhitzungszeit berechnet, die erste Anzeigevorrichtung die berechnete Erhitzungszeit sowie eine Darstellung der Bräunungsvorrichtung und/oder der Umluft-Erhitzungsvorrichtung und/oder der Vorrichtung zur Erzeugung von Mikrowellenenergie, die bei der Durchführung der von der Verarbeitungsvorrichtung gewählten Erhitzungsmaßnahme arbeiten, anzeigt, wobei der Hauptrechner und der Sklavenrechner während einer Zeit t aktiv sind, in deren Verlauf der Benutzer die von der Informationsverarbeitungsvorrichtung bestimmte Erhitzungsmaßnahme modifizieren, annullieren oder auslösen kann, und in einen Ruhezustand zurückkehrt, wenn keine Maßnahme ausgelöst wird.

## Claims

1. Oven comprising an enclosure (2) for cooking foodstuffs including an electrical resistance-type browning device (3), a rotating-heat device (4) and a microwave energy generation device (5), a power supply circuit for supplying the electrical resistance-type browning device and/or the rotating-heat device and/or the microwave energy generation device, and a control panel which includes, on the one hand, selection means (11) making it possible to choose a heating sequence to be applied in the said enclosure (2) and invoking the browning device (3) and/or the rotating-heat device (4) and/or the microwave energy generation device (5), and to input the type of foodstuff and its weight, and, on the other hand, control means (8) linked to information-processing means (9) which comprise a main computer (10) determining a heating time on the basis of the selection means and which trigger the operation of the power supply circuit, characterised in that the information-processing means (9), on the one hand, are connected to visual-display means (12) displaying the calculated heating time as well as a representation of the browning device (3) and/or of the rotating-heat device (4) and/or of the microwave energy generation device (5) activated when the power supply circuit is triggered, and, on the other hand, comprise a slave computer (13) linked with the main computer (10) via a bidirectional bus (14) and to which are connected the selection means (11), a storage memory (15) containing information which can be selected via the selection means (11) and the visual-display means (12) for displaying the information which can be selected.

2. Cooking oven according to Claim 1, characterised in that the visual-display means (12) comprises a first visual-display means (20) connected to the main computer (10) and a second visual-display means (21) connected to the slave computer (13).

3. Cooking oven according to either of the preceding claims, characterised in that the storage memory (15) contains:
- n files, each containing a given list, in a language of a given country, of a certain number of types of foodstuffs;
- a defined number i of heating sequences to be applied to each type of foodstuff;
- code numbers αᵢ each corresponding to a particular type of foodstuff on the basis of a given heating sequence.

4. Cooking oven according to Claim 3, characterised in that the number i of heating sequences to be selected is of the order of 4 and corresponds either to defrosting, or to reheating, or to cooking, or to cooking-browning-cooking au gratin-roasting.

5. Cooking oven according to any one of the preceding claims, characterised in that the control means (8) comprise a start-up button (24) for triggering the activation of the information-processing means and a test button (25) for checking the processing means.

6. Method of operation of an oven according to Claim 5, characterised in that, upon the first actuation of any one of the selection means (11) by the user, the control means (8) allow triggering of the excitation of the main computer (10) which, via a subprogramme, triggers the compiling of a first message M₁ containing a turn-on command and the main computer (10) sends the slave computer (13) the said first message M₁ as well as a word for selecting a language of a particular country, the slave computer (13), after receiving the first message M₁ and the language selection word, sends an acknowledgement of reception AR to the main computer (10), the slave computer (13) triggers the activation of the visual-display means (12) of the selection means, then, when the selection means (11) are actuated a second time by the user, the visual-display means (12) displays the type of foodstuff selected by the user, the weight of the said foodstuff as well as the heating sequence determined and, when the user actuates either the start-up button (24) or the test button (25), the control means (8) trigger either the start of a heating sequence determined by the information-processing means (9) on the basis of the selection means (11), or a check on the said heating sequence determined by the processing means (9) respectively without starting the said heating sequence, the said check allowing the user to look up the selected and calculated information or to make changes to the heating operation determined before the oven is started up.

7. Method of operation for an oven according to Claim 6, characterised in that, with the user actuating the start-up button (24), the main computer transfers into its storage memory (15) the information output by the selection means (11) and contained in the storage memory (15) linked to the slave computer (13), the main computer (10) calculates the heating time to be applied and corresponding to the heating sequence determined, the visual-display means displays the said heating time as well as a representation of the browning device and/or of the rotating-heat device and/or of the microwave energy generation device operating for the said selected heating sequence, the main computer triggers the operation of the power supply circuit and inhibits the slave computer, the main computer determines the end of the selected heating sequence, triggers its quiescent state, and sends the slave computer an end-of-operation message entailing the second visual-display means being switched off and the said slave computer being set to standby position.

8. Method of operation for an oven according to Claim 6, characterised in that, with the user actuating the test button (24), the main computer transfers into its information memory the information output by the selection means and contained in the storage memory linked to the slave computer, and the main computer calculates the heating time to be applied to the foodstuff to be processed, the first visual-display means displays the said calculated heating time as well as a representation of the browning device and/or of the rotating-heat device and/or of the microwave energy generation device put into operation during the heating operation chosen by the processing means, the main computer and the slave computer being active for a time t in the course of which the user can alter, cancel or trigger the heating operation determined by the information-processing means and returning to a quiescent state if no action is triggered.
